# EUROPÄISCHE PATENTANMELDUNG

(11) **EP 0 662 438 A1**
(43) Veröffentlichungstag der Anmeldung: **12.07.1995**
(21) Anmeldenummer: 94120058.6
(22) Anmeldetag: 17.12.1994
(51) Int. Cl.: B65H 19/18

(54) **Vorrichtung zum kontinuierlichen Zuführen eines Bandes zu einer bandverarbeitenden Einrichtung**

(30) Priorität: 05.01.1994 DE 4400154
(71) Anmelder: Cyklop GmbH, D-50996 Köln (DE)
(72) Erfinder: Wehr, Hubert, D-53332 Bornheim (DE)
(74) Vertreter: Hennicke, Albrecht, Dipl.-Ing.

(57) **Zusammenfassung**

Vorrichtung zum kontinuierlichen Zuführen eines Bandes (11) zu einer bandverarbeitenden Einrichtung, bei der der Bandanfang (11a) einer zweiten Vorratsrolle (22) an das Bandende (11b) einer ersten Vorratsrolle (21) angeschweißt und die Verbindungsstelle (74) dann mit einer Kalibriervorrichtung (37) an der Bandoberfläche (75) geglättet und an den Bandrändern (76) beschnitten wird, wobei beim Verbinden und Kalibrieren der Bänder die dadurch eintretende Hemmung durch einen nachgeschalteten Bandspeicher (14, 15) ausgeglichen wird.

## Beschreibung

Die Erfindung betrifft eine Vorrichtung zum kontinuierlichen Zuführen eines Bandes, insbesondere eines Kunststoffbandes von einem Vorrat zu einer bandverarbeitenden Einrichtung, insbesondere zu einer Bandumreifungseinrichtung, mit einer ersten Vorratsrolle und einer zweiten Vorratsrolle, von denen der Bandanfang der einen Vorratsrolle einer Bandvorschubeinrichtung zugeführt wird, sobald das Bandende der anderen Vorratsrolle erreicht ist.

Bei bandverarbeitenden Einrichtungen, beispielsweise bei Umreifungsvorrichtungen für Packstücke, kann auf einer Vorratsrolle nur eine begrenzte Bandmenge zur Verfügung gestellt werden. Wenn dieser Bandvorrat erschöpft ist, muß eine neue Vorratsrolle bereitgestellt werden, und es ist notwendig, den Bandanfang dieser neuen Rolle der bandverarbeitenden Einrichtung in dem Augenblick zuzuführen, in dem das Band der vorhergehenden Rolle zu Ende geht. Hierbei ist es schwierig, den richtigen Moment abzupassen, und die Bedienungsperson muß ständig auf den Ablauf der Vorratsrolle achten und immer im richtigen Augenblick zur Verfügung stehen, um den Bandanfang der neuen Rolle rechtzeitig einzulegen.

Aufgabe der Erfindung ist es, diesen Nachteil zu vermeiden und eine Vorrichtung zu schaffen, mit der der Bandwechsel automatisch vor sich geht und keine Störungen beim Einführen eines neuen Bandes auftreten.

Diese Aufgabe wird mit der Erfindung durch eine Verbindungsvorrichtung zum Verbinden des Bandendes der einen Vorratsrolle mit dem Bandanfang der anderen Vorratsrolle gelöst, wobei eine Klemmvorrichtung zum Einlegen, Halten und Bereitstellen eines Bandanfanges für die Verbindungsvorrichtung, eine Kalibriervorrichtung zum Kalibrieren und Glätten der Bandverbindungsstelle und eine Bandspeichervorrichtung vorgesehen ist, die der Verbindungsvorrichtung und der Kalibriervorrichtung nachgeschaltet ist und von der aus das Band der bandverarbeitenden Einrichtung zugeführt wird.

Diese Ausgestaltung hat den Vorteil, daß die jeweilige Ersatzrolle unabhängig davon bereitgestellt werden kann, wie weit das Band von der ersten Vorratsrolle abgelaufen ist. Außerdem ist es nicht mehr notwendig, das bereitgehaltene Bandende in die bandverarbeitende Einrichtung oder dessen Speichervorrichtung einzuführen, da es automatisch von der Verbindungsvorrichtung am Bandende der abgelaufenen Vorratsrolle angeklebt, angeschweißt oder auf sonstige Weise befestigt wird und von dem Bandende in die bandverarbeitende Einrichtung mitgenommen wird. Die Bedienungsperson braucht deshalb den Bandwechsel nicht ständig zu beobachten.

Um die Verbindungsvorrichtung rechtzeitig in Tätigkeit zu setzen, ist in Bewegungsrichtung des Bandes im Abstand zu der Verbindungsvorrichtung zweckmäßig ein Sensor mit einer Schaltvorrichtung angeordnet, der das Bandende einer Vorratsrolle erfaßt und die Verbindungsvorrichtung aktiviert.

Damit die Verbindungsstelle zwischen dem Bandende der einen Vorratsrolle und dem Bandanfang der zweiten Vorratsrolle die das Band verarbeitende Vorrichtung störungsfrei passiert und dort, wie das übrige Band auch, verarbeitet werden kann, ist zwischen der Kalibriervorrichtung und der Bandspeichervorrichtung zweckmäßig eine Transportvorrichtung mit einer Bandklemme angeordnet, die das Band im Abstand von seinem Bandende festhält und die fertige Bandverbindungsstelle durch die Kalibriervorrichtung zieht, wo die Verbindungsstelle an ihren Rändern beschnitten und geglättet.

Die Verbindungsvorrichtung kann eine Schweißvorrichtung sein, die das Bandende der einen Vorratsrolle mit dem Bandanfang der anderen Vorratsrolle durch Druck und Wärme verbindet. Eine solche Schweißvorrichtung ist zum Verbinden von Stahlbändern oder Kunststoffbändern verwendbar. Zum Verbinden von Kunststoffbändern wird zweckmäßig eine Reibschweißvorrichtung verwendet, die ein Messer zum Abschneiden des Bandendes und eine Reibbacke zum Hin- und Herbewegen des Bandendes der einen Vorratsrolle unter Druck auf dem Bandanfang der anderen Vorratsrolle zum Erzeugen von Reibungswärme zwischen den Berührungsflächen und Bändern aus thermosensitivem Material aufweist. Wird eine solche Verbindungsvorrichtung von dem Sensor aktiviert, der das Bandende einer Vorratsrolle feststellt, so schneidet der niederfahrende Reibungsstempel zunächst das hinter ihm noch vorhandene Bandende ab, wobei er sich gleichzeitig auf den Bandanfang der zweiten Vorratsrolle legt und diesen festhält. Der Schwinger der Reibschweißvorrichtung bewegt dann das Bandende auf dem Bandanfang der neuen Vorratsrolle hin und her und erzeugt hierdurch eine Reibungswärme, die die Bänder an ihren aufeinanderliegenden Oberflächen erweicht, wo sie anschließend durch Aufeinanderdrücken miteinander sich verbinden, sobald die Reibbewegung aufhört.

Die Kalibriervorrichtung für die Verbindungsstelle hat mindestens eine Glättfläche zum Glätten der Bandoberfläche im Bereich der Verbindungsstelle und zwei Messer zum Glätten der Bandränder im Bereich der Verbindungsstelle. Hierbei kann die Kalibriervorrichtung eine drehend angetriebene Glättrolle aufweisen, die auf ihrem Umfang ein Schleifmittel trägt und an ihren Rändern mit Messerkanten versehen ist. Diese Messerkanten können beispielsweise den Umfangsrand von Kreismessern bilden, die auf den Stirnflächen der Glättrolle angeordnet sind.

besonders zweckmäßig ist es, wenn die Glättrolle in die Bewegungsbahn des Bandes vor- und zurückbewegbar ist und mit einer Gegendruckfläche zusammenwirkt, über die das Band hinweggezogen wird. Die Glättrolle kann hierbei mit Hilfe eines Luftzylinders in die Bewegungsbahn des Bandes eingeschwenkt werden, sobald die Verbindungsstelle hergestellt ist und das Band von einer Transportvorrichtung in Längsrichtung unter der Glättrolle vorbeigezogen wird. Zu diesem Zwecke wird zweckmäßig ein von einem Antrieb in Bandlängsrichtung bewegbarer Schlitten vorgesehen, der einen Bandkanal aufweist, in dem das Band mit der Bandklemme festklemmbar ist.

Die Klemmvorrichtung, mit der der Bandanfang der neuen Vorratsrolle gehalten wird, bis die Verbindungsvorrichtung beim Vorbeilauf des Bandendes am Sensor aktiviert wird, ist zweckmäßig aus der Bewegungsbahn des Bandes ausschwenkbar, so daß die Bedienungsperson den Bandanfang einer neuen Rolle leicht in die Klemmvorrichtung einlegen kann. Die Klemmvorrichtung wird dann in die Bewegungsbahn des Bandes zurückgeschwenkt, wobei ein Klemmantrieb den Bandanfang in der Klemmvorrichtung festklemmt. Dieser Klemmantrieb wird gelöst, sobald ein Messer das hintere Bandende der abgelaufenen Vorratsrolle abgeschnitten hat und die Verbindungsstelle zwischen Bandanfang und Bandende hergestellt ist. Hierbei löst die Verbindungsvorrichtung gleichzeitig die Verriegelung der Klemmvorrichtung, so daß diese automatisch nach vorn schwenkt, sobald die Verbindung der Bänder herge- stellt ist.

Weitere Merkmale und Vorteile der Erfindung ergeben sich aus der nachfolgenden Beschreibung und den Zeichnungen, in denen eine bevorzugte Ausführungsform der Erfindung an einem Beispiel näher erläutert ist. Es zeigt:
- Fig. 1: eine Vorrichtung zum Verbinden der Bandenden von zwei Vorratsrollen und zum kontinuierlichen Zuführen eines Bandes zu einer Umreifungsstation in einer seitlichen Ansicht in schematischer Darstellung,

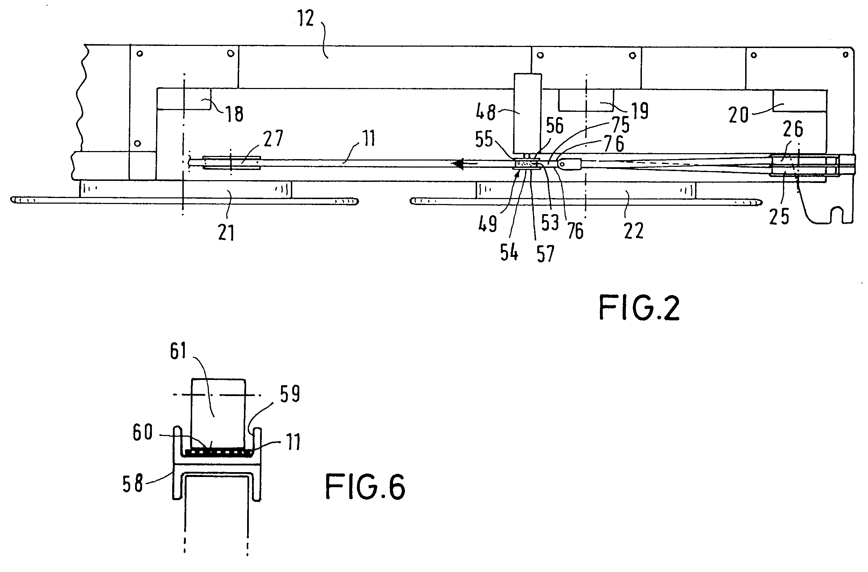

- Fig. 2: den Gegenstand der Fig. 1 in einer teilweisen Draufsicht,
- Fig. 3: den Gegenstand der Fig. 1 in einem senkrechten Querschnitt nach Linie III-III,
- Fig. 4: den Gegenstand der Fig. 1 in einem senkrechten Querschnitt nach Linie IV-IV,

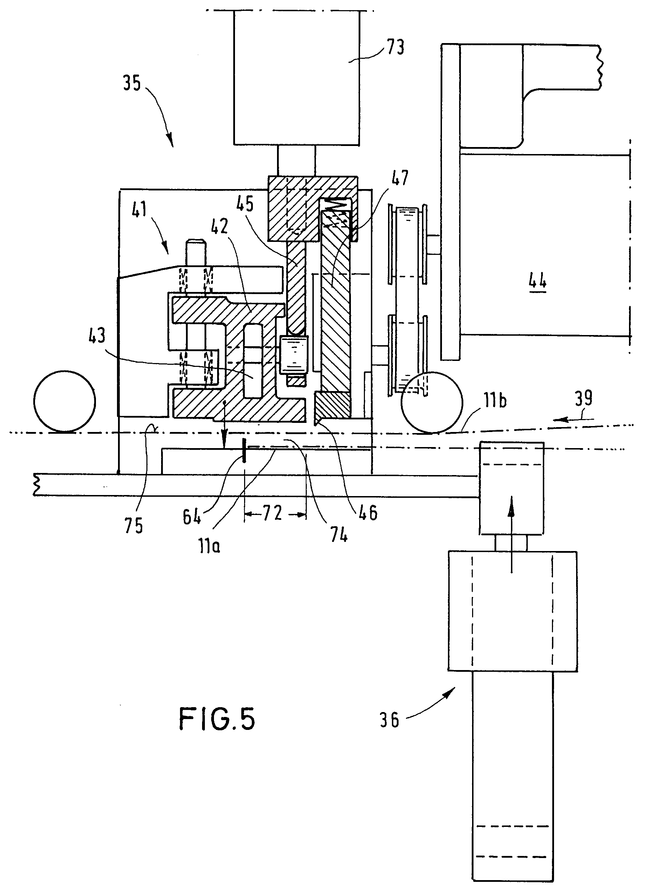

- Fig. 5: eine Einzelheit der Fig. 1 in einem senkrechten Längsschnitt, die die Verbindungseinrichtung und die Klemmvorrichtung in vereinfachter, schematischer Darstellung in vergrößertem Maßstab zeigt und
- Fig. 6: einen Teilschnitt nach Linie VI-VI der Fig. 1.

In den Zeichnungen ist mit 10 eine Bandabroll- und -Zuführvorrichtung bezeichnet, mit der ein Umreifungsband - im folgenden kurz nur als "Band" 11 bezeichnet - aus thermosensitivem Kunststoff, beispielsweise aus Polypropylen, einer nicht dargestellten Umreifungsstation für Packstücke zugeführt wird.

Die Bandabroll- und-Zuführvorrichtung besteht aus einem Grundrahmen 12, auf dem eine Klettersäule 13 mit einer Bandspeichervorrichtung 14, 15 und ein Lagerrahmen 16 angeordnet sind. Der Lagerrahmen 16 hat eine Tischplatte 17, die von drei Pfostenpaaren 18, 19 und 20 getragen wird, die durch hier nicht näher dargestellte Traversen und Streben seitlich ausgesteift sind. An den Pfosten 18 ist eine erste Vorratsrolle 21 und an den Pfosten 19 ist eine zweite Vorratsrolle 22 drehbar gelagert. Auf jeder Vorratsrolle 21 und 22 ist eine beträchtliche Länge Band 11a bzw. 11b aufgewickelt, das über mehrere Umlenkrollen 24a, 24b, 25, 26 und 27 der Bandspeichervorrichtung 14 und 15 und von dort der Umreifungsstation zugeführt wird, wie dies durch den Pfeil 28 angedeutet ist. Jede Vorratsrolle 21, 22 hat eine Bremse 29 bzw. 30, welche verhindert, daß sich die Vorratsrolle mit einer höheren Geschwindigkeit dreht als dies der Bandabzugsgeschwindigkeit entspricht.

Die Bandspeichervorrichtung besteht aus einem am oberen Ende der Klettersäule 13 fest angeordneten Rollenblock 15 mit mehreren, auf einer gemeinsamen, festen Achse 31 frei drehbar gelagerten Rollen 32 und aus einem am unteren Ende der Klettersäule 13 vertikal verschiebbar gelagerten beweglichen Rollenblock 14, der auf einer an der Klettersäule 13 vertikal verschiebbaren Achse 33 frei drehbare Rollen 34 trägt. Das von der Bandabroll- und Zuführvorrichtung 10 abgezogene Band 11 ist achtfach über die Rollen 32 und 34 der Rollenblöcke 15 und 14 geführt und wird vom oberen Rollenblock 15 aus der bandverarbeitenden Einrichtung zugeführt. Hierbei kann der bewegliche Rollenblock 14 an der Klettersäule 13 nach oben wandern, wenn das Band 11 in der Bandabroll- und -Zuführvorrichtung 10 festgehalten wird und kein Band in die Bandspeichervorrichtung nachläuft.

Die in den Zeichnungen dargestellte Bandabroll- und -Zuführvorrichtung 10 ist mit einer Verbindungsvorrichtung 35, einer Klemmvorrichtung 36, einer Kalibriervorrichtung 37 und einer Transportvorrichtung 38 versehen, die in geeigneter Weise auf oder unter der Tischplatte 17 angeordnet sind. In Bewegungsrichtung 39 im Abstand vor der Verbindungsvorrichtung 35 ist an der Säule 20 zwischen den Umlenkrollen 24a und 24b einerseits und 25 und 26 andererseits ein Sensor 40 mit Schaltvorrichtung angeordnet, der das jeweils an ihm vorbeilaufende Bandende der ersten Vorratsrolle 21 oder der zweiten Vorratsrolle 22 abtastet und die Verbindungsvorrichtung 35 einschaltet.

Die Verbindungsvorrichtung 35 ist eine an sich bekannte Reibschweißvorrichtung, wie sie üblicherweise zum Verbinden der Enden einer Bandumreifung verwendet wird. Diese Reibschweißvorrichtung hat eine hin- und herbewegliche Reibbacke 42, die über einen Exzenter 43 von einem Motor 44 quer zur Bandlängsrichtung hin- und hergeschwenkt wird, während sie von einem Druckstempel 45 mit dem oben liegenden Bandende 11b auf einen unten liegenden Bandanfang 11a gedrückt wird. Durch die erzeugte Reibungswärme werden die thermoplastischen Kunststoffbänder an ihrer Oberfläche erwärmt und miteinander verschweißt, sobald die Reibbacke 42 zum Stillstand kommt.

In Bewegungsrichtung 39 vor der Reibbacke 42 befindet sich ein Messer 46, das am hinteren Rand eines federbelasteten Haltestempels 47 angeordnet ist und das hintere Bandende 11b abschneidet und hierbei zugleich auf den darunterliegenden Bandanfang drückt und diesen mit festhält, wenn die Reibbacke 42 die Schweißverbindung herstellt.

Die in Bewegungsrichtung 39 hinter der Verbindungsvorrichtung angeordnete Kalibriervorrichtung 37 besteht im wesentlichen aus einer von einem Motor 48 drehend angetriebenen Glättrolle 49, die an einem dreieckigen Kipphebel 50 gelagert ist und von einem pneumatischen Zylinder 51 auf eine Gegendruckfläche 52 in der Bewegungsbahn des Bandes 11 niedergeschwenkt werden kann. Die Glättrolle 49 trägt auf ihrem Umfang ein Schleifmittel 53 und auf ihren beiden Stirnseiten Kreismesser 54 und 55, die mit ihren über den Außenumfang der Glättrolle vorstehenden Rändern 56 und 57 Messerkanten bilden.

In Bewegungsrichtung 39 hinter der Kalibriervorrichtung 37 und vor der letzten Umlenkrolle 27 ist die Transportvorrichtung 38 angeordnet. Diese besteht aus einem auf dem Tisch 17 in Bandlängsrichtung verschiebbaren Schlitten 58, der an seiner Oberseite einen nach oben offenen Bandkanal 59 aufweist, durch den das Band 11 hindurchläuft und auf dessen Boden 60 das Band mit einer Bandklemme 61 festgeklemmt werden kann. Die Bandklemme 61 ist eine sogenannte "Froschklemme" die entgegen der Bewegungsrichtung 39 des Bandes 11 selbstklemmend ist und am Ende der Kolbenstange 62 eines pneumatischen Antriebszylinders 63 angelenkt ist, der die Bandklemme 61 und mit ihr das im Bandkanal 59 festgeklemmte Band 11 mitsamt dem Schlitten 58 in Bewegungsrichtung 39 schieben kann.

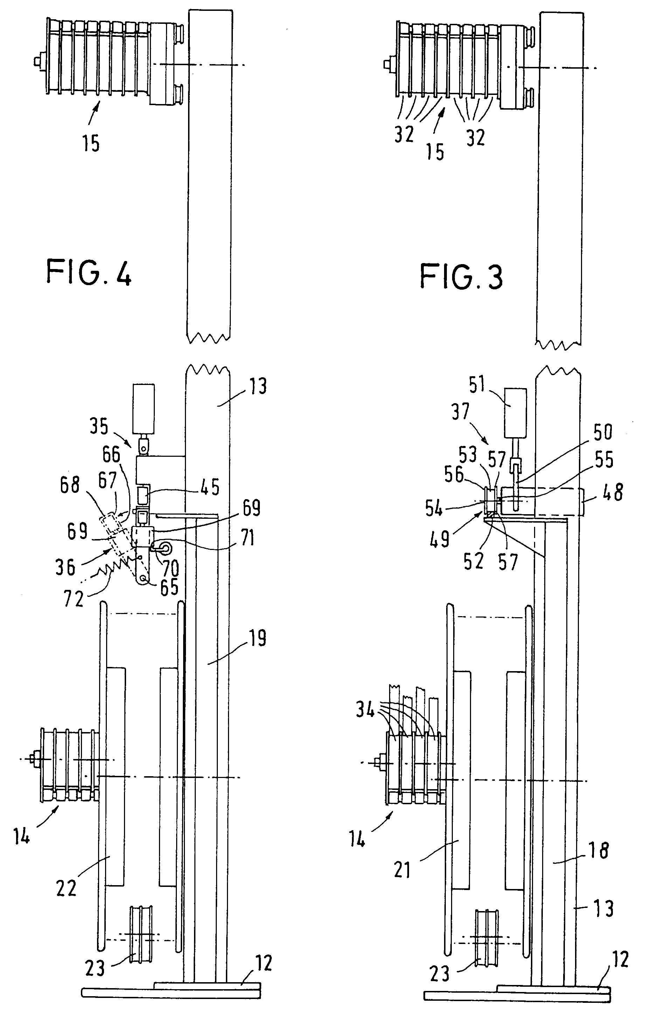

Unterhalb der Verbindungsvorrichtung 35 befindet sich ein An-Schlag 64 für den Bandanfang 11a der zweiten Vorratsrolle 22, der bis zum Anschweißen an das Bandende 11b von der Klemmvorrichtung 36 festgehalten wird. Die Klemmvorrichtung 36 ist unterhalb der Tischplatte 17 angeordnet und um eine horizontale Achse 65 aus der Bewegungsbahn des Bandes 11 nach vorne ausschwenkbar (Fig. 4). Die Klemmvorrichtung 36 hat einen an ihrer Rückseite 66 offenen Banddurchlaß 67, der oberseitig von einer Klemmplatte 68 begrenzt wird, die von einen pneumatischen Klemmenantriebszylinder 69 auf das in den Banddurchlaß 67 eingelegte Band niedergezogen wird und dieses festklemmt. Eine Sperrklinke 70 greift in eine hierfür vorgesehene Raste 71 am Antriebszylinder 69 ein und hält die Klemmvorrichtung 36 in ihrer senkrechten Bereitstellungslage, in der sich der Bandanfang 11a in der Bewegungsbahn des Bandes 11 befindet. Beim Niederfahren des Druckstempels 45 und des Haltestempels 47 wird diese Sperrklinke 70 von einem an der Verbindungsvorrichtung 35 angeordneten, nicht näher dargestellten Betätigungsglied aus der Raste 71 ausgehoben, wobei gleichzeitig der Antriebszylinder 69 die Klemmplatte 68 lüftet. Eine am Klemmenantriebszylinder 69 angreifende Feder 72 schwenkt dann die Klemmvorrichtung 36 nach vorn, wobei der nun von dem federbelasteten Haltestempel 47 der Verbindungsvorrichtung 35 festgehaltene Bandanfang 11a nach hinten aus dem Banddurchlaß 67 der Klemmvorrichtung 36 austritt.

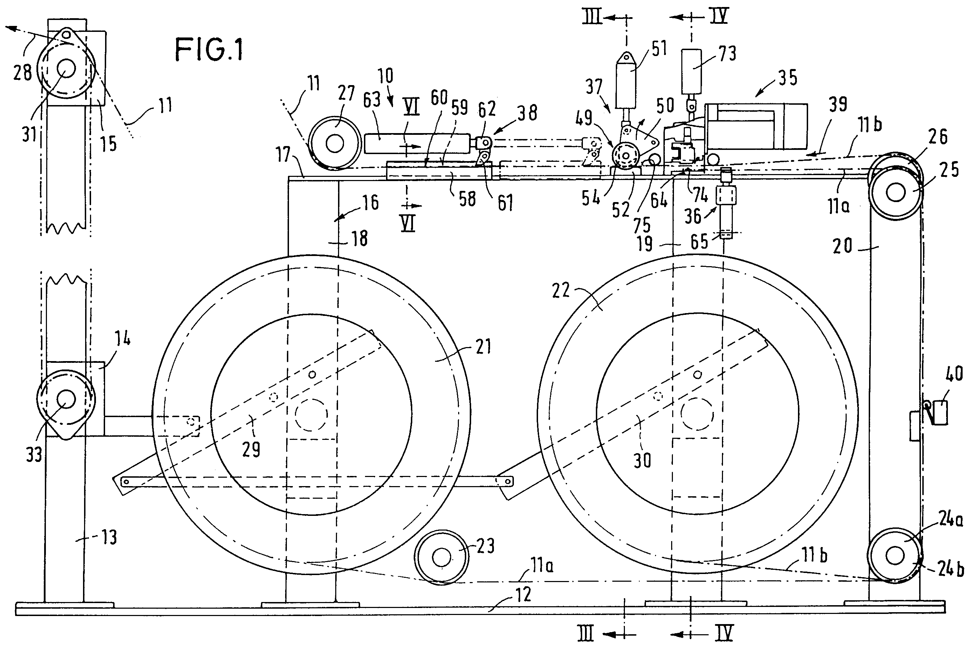

Die Wirkungsweise der Vorrichtung ist folgende:
Solange die zweite Vorratsrolle 22 eine genügende Bandmenge enthält, wird das Band 11 in Richtung des Pfeiles 28 von der Bandspeichervorrichtung 14, 15 abgezogen. Hierbei befindet sich der untere, bewegliche Rollenblock 14 in seiner in Fig. 1 dargestellten tiefsten Lage und das Band 11 läuft um alle Rollen 32 und 34 der Rollenblöcke 14 und 15 um, wobei es dem oberen Rollenblock zugeführt wird und ungehindert von der zweiten Vorratsrolle 22 abgezogen wird. Es läuft hierbei um die Umlenkrollen 24b, 26 und 27, während sich die Verbindungsvorrichtung 35, die Kalibriervorrichtung 37 und die Transportvorrichtung 38 in ihren unwirksamen Lagen befinden.

Während das Band 11 von der zweiten Vorratsrrolle 22 abgezogen wird, kann die Bedienungsperson eine volle, erste Vorratsrolle 21 auf ihre Achse im Lagerrahmen 16 aufstecken, den Bandanfang 11a um die Umlenkrollen 24a und 25 bis zum Anschlag 64 führen und von hinten her in den Banddurchlaß 67 der vorgeschwenkten Klemmvorrichtung 36 einlegen. Die Bedienungsperson schwenkt dann die Klemmvorrichtung 36 in ihre senkrechte, in Fig. 4 in ausgezogenen Linien dargestellte Lage, in der sie von der Sperrklinke 70 verriegelt wird, die hierbei gleichzeitig den Klemmenantriebszylinder 69 aktiviert, der mit seiner Klemmplatte 68 den Bandanfang 11a festklemmt.

Wenn der auf der zweiten Vorratsrolle 22 befindliche Bandvorrat aufgebraucht ist und das Bandende 11b an dem Sensor 40 vorbeiläuft, schaltet dessen Schaltvorrichtung die Verbindungsvorrichtung 35 ein, deren Motor 44 die Reibbacke 42 hin- und herbewegt und deren pneumatischer Antriebszylinder 73 den Druckstempel 45 auf die Reibbacke 42 und den federbelasteten Haltestempel 47 auf das Bandende 11b drückt. Das Messer 46 schneidet hierbei das Bandende 11b ab, welches hierdurch frei wird und nach unten fallen kann.

Durch die hin- und hergehende Bewegung der Reibbacke 42 wird der vor dem Messer 46 verbliebene Teil des Bandendes unter Druck auf dem Bandanfang 11a hin- und hergeschwenkt und hierdurch Reibungswärme erzeugt. Hierdurch werden die einander zugewandten Oberflächen der Bänder 11a und 11b erweicht und miteinander verschweißt, sobald die Reibbacke 42 bei gleichzeitigem Ausüben eines Anpreßdruckes die Bänder aufeinander drückt, wobei sich eine Verbindungsstelle 72 ergibt, die sich von dem Anschlag 64 bis zum Messer 46 erstreckt.

Durch den Schweißvorgang und das nachfolgende Zusammenpressen des Endes des einen Bandes und des Anfanges des anderen Bandes kann ein wenig erweichtes Bandmaterial seitlich austreten und auf die Bandoberfläche 75 gelangen. Da dieser Schweißwulst auf der Bandoberfläche 75 und an den seitlichen Bandrändern 76 bei der nachfolgenden Verarbeitung des Bandes Schwierigkeiten bereiten kann, ist es notwendig, diese Schweißwülste zu entfernen und die Bandoberfläche 75 zu glätten und die Bandränder 76 im Bereich der Verbindungsstelle 74 zu beschneiden. Diese nachfolgende Bearbeitung wird von der Kalibriervorrichtung 37 durchgeführt.

Sobald die Verbindungsstelle 74 hergestellt ist, lüftet der Klemmenantriebszylinder 69 die Klemmplatte 68. Die Feder 72 schwenkt dann die Klemmvorrichtung 36 nach vorn, wobei der Bandanfang 11a der ersten Vorratsrolle 21 aus dem Banddurchlaß 67 austritt. Das im Bandkanal 59 des Schlittens 58 liegende Band wird nun von der Bandklemme 61 festgeklemmt und langsam in Bewegungsrichtung 39 durch die Kalibriervorrichtung 37 gezogen, wobei sich der Schlitten 58 in Pfeilrichtung bewegt. Die von dem pneumatischen Zylinder 51 auf die Gegendruckfläche 52 niedergeschwenkte Glättrolle 49 schleift nun die Bandoberfläche 75 ab, wobei gleichzeitig die Messerkanten 54 und 55 der Kreismesser die Bandränder 76 glattschneiden.

Sobald die Verbindungsstelle 74 vollständig durch die Kalibriervorrichtung 37 hindurchgelaufen ist, wird der Schlitten 58 von dem pneumatischen Antriebszylinder 63 in seine Ausgangslage zurückgefahren. Hierdurch schwenkt die Bandklemme 61 zurück und gibt das Band 11 frei, das nun ungehindert durch den Bandkanal 59 gezogen werden kann, nachdem die Glättrolle 49 vom pneumatischen Zylinder 51 hochgeschwenkt und auch die Reibbacke 42 und die Stempel 45 und 47 der Verbindungsvorrichtung aus der Bewegungsbahn des Bandes herausgefahren worden sind.

Das Band 11 wird nun von der ersten Vorratsrolle abgezogen, füllt die Bandspeichervorrichtung 14, 15 wieder und die Bedienungsperson kann den leeren Kern der zweiten Vorratsrolle 22 abnehmen und eine volle Vorratsrolle aufstecken und nun deren Anfang in die Klemmvorrichtung 36 einlegen, wie dies weiter oben beschrieben worden ist.

Die Erfindung ist nicht auf die dargestellte und beschriebene Ausführungsform beschränkt, sondern es sind mehrere Änderungen und Ergänzungen möglich, ohne den Rahmen der Erfindung zu verlassen. Beispielsweise ist es auch möglich, die Enden von Stahlbändern beispielsweise durch Punktschweißung mit einer geeigneten Vorrichtung zu verbinden, oder andere Bänder, beispielsweise Papierbänder durch einen geeigneten Klebstoff aneinander zu kleben, um kontinuierlich von einer Vorratsrolle auf eine andere überzugehen. Je nach Art der verwendeten Bänder kann auch die Kalibriereinrichtung etwas anders ausgebildet sein.

## Patentansprüche

1. Vorrichtung zum kontinuierlichen Zuführen eines Bandes, insbesondere eines Kunststoffbandes von einem Vorrat zu einer bandverarbeitenden Einrichtung, insbesondere zu einer Bandumreifungseinrichtung, mit einer ersten Vorratsrolle und einer zweiten Vorratsrolle, von denen der Bandanfang der einen Vorratsrolle einer Bandvorschubeinrichtung zugeführt wird, sobald das Bandende der anderen Vorratsrolle erreicht ist, **gekennzeichnet durch** eine Verbindungsvorrichtung (35) zum Verbinden des Bandendes (11b) der einen Vorratsrolle (22) mit dem Bandanfang (11a) der anderen Vorratsrolle (21); durch eine Klemmvorrichtung (36) zum Einlegen, Halten und Bereitstellen eines Bandanfanges (11a) für die Verbindungsvorrichtung (35), durch eine Kalibriervorrichtung (37) zum Kalibrieren und Glätten der Bandverbindungsstelle (74) und durch eine Bandspeichervorrichtung (14,15) die der Verbindungsvorrichtung (35) und der Kalibriervorrichtung (37) nachgeschaltet ist und von der aus das Band (11) der bandverarbeitenden Einrichtung zugeführt wird.

2. Vorrichtung nach Anspruch 1, **dadurch gekennzeichnet, daß** in Bewegungsrichtung (39) des Bandes (11) im Abstand von der Verbindungsvorrichtung (35) ein Sensor (40) mit einer Schaltvorrichtung angeordnet ist, der das Bandende (11b) einer Vorratsrolle (22) erfaßt und die Verbindungsvorrichtung (35) aktiviert.

3. Vorrichtung nach Anspruch 1 oder 2, **dadurch gekennzeichnet, daß** zwischen der Kalibriervorrichtung (37) und der Bandspeichervorrichtung (14,15) eine Transportvorrichtung (38) mit einer Bandklemme (61) angeordnet ist, die das Band (11) festhält und die fertige Bandverbindungsstelle (74) durch die Kalibriervorrichtung (38) zieht.

4. Vorrichtung nach einem der Ansprüche 1 bis 3, **dadurch gekennzeichnet, daß** die Verbindungsvorrichtung (35) eine Schweißvorrichtung ist, die das Bandende (11b) der einen Vorratsrolle (22) mit dem Bandanfang (11a) der anderen Vorratsrolle (21) durch Druck und Wärme verbindet.

5. Vorrichtung nach einem der Ansprüche 1 bis 4, **dadurch gekennzeichnet, daß** die Verbindungsvorrichtung (35) eine Reibschweißvorrichtung (41) ist, die ein Messer (46) zum Abschneiden des Bandendes (11b) und eine Reibbacke 42) zum Hin- und Herbewegen des Bandendes (11b) der einen Vorratsrolle (22) unter Druck auf dem Bandanfang (11a) der anderen Vorratsrolle (21) zum Erzeugen von Reibungswärme zwischen den Berührungsflächen von Bändern aus thermosensitivem Material aufweist.

6. Vorrichtung nach einem der Ansprüche 1 bis 5, **dadurch gekennzeichnet, daß** die Kalibriervorrichtung (37) mindestens eine Glättfläche zum Glätten der Bandoberfläche (75) im Bereich der Verbindungsstelle (72) und zwei Messer (54, 55) zum Glätten der Bandränder (76) im Bereich der Verbindungsstelle (74) aufweist.

7. Vorrichtung nach einem der Ansprüche 1 bis 6, **dadurch gekennzeichnet, daß** die Kalibriervorrichtung eine drehend angetriebene Glättrolle (49) aufweist, die auf ihrem Umfang ein Schleifmittel (53) trägt und an ihren Rändern (56, 57) mit Messerkanten (54, 55) versehen ist.

8. Vorrichtung nach einem der Ansprüche 1 bis 7, **dadurch gekennzeichnet, daß** die Glättrolle (49) in der Bewegungsbahn des Bandes (11) vor- und zurückbewegbar ist und mit einer Gegendruckfläche (52) zusammenwirkt, über die das Band (11) hinweggezogen wird.

9. Vorrichtung nach einem der Ansprüche 1 bis 8, **dadurch gekennzeichnet , daß** die Transportvorrichtung (38) einen von einem Antrieb (63) in Bandlängsrichtung bewegbaren Schlitten (58) mit einem Bandkanal (59) aufweist, in dem das Band (11) mit der Bandklemme (61) festklemmbar ist.

10. Vorrichtung nach einem der Ansprüche 1 bis 9, **dadurch gekennzeichnet, daß** die Klemmvorrichtung (36) aus der Bewegungsbahn des Bandes (11) ausschwenkbar und mit einem Klemmantrieb (69) versehen ist, der von der Verbindungsvorrichtung (35) aktivierbar ist und hierbei seine Schwenkvorrichtung freigibt.
